(19) Europäisches Patentamt
European Patent Office
Office européen des brevets

(11) Numéro de publication: **0 014 648**
**A1**

(12) # DEMANDE DE BREVET EUROPEEN

(21) Numéro de dépôt: **80400162.6**

(22) Date de dépôt: **01.02.80**

(51) Int. Cl.³: **C 02 F 1/14**
C 02 F 1/16, F 24 J 3/02

(30) Priorité: **13.02.79 FR 7903584**
**29.01.80 FR 8001882**

(43) Date de publication de la demande:
**20.08.80 Bulletin 80/17**

(84) Etats Contractants Désignés:
**AT BE CH DE GB IT LU NL SE**

(71) Demandeur: **Grenet, Edouard Paul**
**28, rue Bapst**
**F-92600 Asnieres(FR)**

(72) Inventeur: **Grenet, Edouard Paul**
**28, rue Bapst**
**F-92600 Asnieres(FR)**

(74) Mandataire: **Roger-Petit, Jean-Camille et al,**
**OFFICE BLETRY 2, Boulevard de Strasbourg**
**F-75010 Paris(FR)**

(54) **Procédé d'obtention simultanée et rentable de sources d'énergie, d'eau douce et de sous-produits à partir de substances aqueuses et d'une source d'énergie.**

(57) On fait boillir la substance aqueuse, par exemple eau de mer, on envoie sous pression la vapeur d'eau produite dans une turbine de turbo-alternateur pour produire de l'électricité, on condense la vapeur résiduelle en eau douce et on récupère comme sous-produit le résidu de l'évaporation, par exemple du sel marin.

On envoie la vapeur d'eau, directement ou à sa sortie de la turbine, sur du fer chauffé à environ 800°C, ce qui fournit de l'hydrogène et, comme sous-produit, de l'oxyde ferrique et la source d'énergie initiale est, outre l'énergie solaire, toute source d'énergie connue même non rentable, telle que du charbon situé à de grandes profondeurs. La substance aqueuse de départ est, outre l'eau de mer, les boues résiduaires, une solution de sel gemme ou un mélange de boues et de solution saline. Dans le cas des boues, le sous-produit est un engrais sec et stérilisé, transformable en briquettes combustibles. Le résidu sel est transformable par électrolyse en hydrogène et en chlorate de sodium, qui est un carburant, le résidu boues-sel fournit un mélange combustible, boues séchées-chlorate de sodium, mélangeable à des ordures ménagères pour favoriser la combustibilité de celle-ci. Le chlorate de sodium est transformable en chlorate de potassium et la vapeur d'eau sous pression peut être condensée dans des réservoirs éloignés et sa chaleur récupérée. Les énergies produites sont utilisables dans le procédé.

EP 0 014 648 A1

Procédé d'obtention simultanée et rentable de sources d'énergie, d'eau douce et de sous-produits à partir de substances aqueuses et d'une source d'énergie

La présente invention vise un procédé fournissant, simultanément et dans les meilleures conditions économiques, des sources d'énergie, de l'eau douce et au moins un sous-produit, à partir de substances aqueuses et d'une source d'énergie, suivant lequel on porte à l'ébullition la substance aqueuse enfermée dans une enceinte étanche, pourvue de moyens d'alimentation en substance aqueuse et de moyens de récupération de la vapeur d'eau et du résidu de l'évaporation, on envoie la vapeur d'eau produite, sous pression, dans une turbine de turbo-alternateur pour la production d'électricité, on condense en eau douce la vapeur d'eau sortant de la turbine, pour l'utiliser comme eau potable, eau à usages domestiques, ou eau d'arrosage ou d'irrigation, et on récupère comme sous-produit le résidu de l'évaporation de la substance aqueuse, caractérisé en ce que l'on envoie en outre la vapeur d'eau, soit directement, soit à sa sortie de la turbine, sur du fer chauffé à environ 800°C, pour la réduire partiellement en hydrogène que l'on recueille, et on condense en eau douce la vapeur d'eau, qui n'a pas été réduite après passage sur le fer, pour l'utiliser aux fins susindiquées, et en ce que l'on utilise, comme source d'énergie initiale, pour chauffer la substance aqueuse de départ et la vapeur d'eau à réduire, outre l'énergie solaire, toute autre source connue d'énergie, même non rentable. On peut mentionner le charbon, les gaz combustibles, l'électricité, la tourbe, les déchets combustibles, cette liste n'étant pas limitative, et l'on peut même avoir recours à une source d'énergie inutilisée parce que trop onéreuse, mais qui devient rentable du fait que le présent procédé fournit lui-même des sources d'énergie abaissant le coût de l'énergie initiale. A titre d'exemple, du charbon, situé à de grandes profondeurs et dont on n'exploite plus les gisements, à cause du coût d'extraction trop élevé, devient utilisable et rentable dans le présent procédé, en tant que source d'énergie initiale, d'autant plus que le procédé fournit, outre des sources d'énergie, des sous-produits négociables, dont il sera question plus loin. Ainsi, dans le cas d'un charbon, dont les couches sont situées à 800 m de profondeur, si le prix de revient de son extraction est double de celui du charbon d'importation, le présent procédé ramène en fait ce prix à une valeur non pas égale, mais même moindre que celle du charbon importé.

Il est à noter que les récipients, dans lesquels on chauffe, soit la substance aqueuse de départ pour produire de la vapeur d'eau, soit cette vapeur pour la réduire en hydrogène, sont chauffés par le dessus, lorsque l'énergie employée à cet effet est l'énergie solaire et le sont généralement par le dessous, lorsqu'elle est une autre forme d'énergie.

Ledit fer, qui est oxydé en oxyde de fer, $Fe_3O_4$, est utilisable comme oligo-élément pour l'agriculture.

Si la substance aqueuse de départ est de l'eau de mer, on recueille, comme sous-produit, du sel marin utilisable comme tel, ou d'où l'on peut extraire, s'il y a surproduction, des éléments tels que le sodium et le magnésium. Dans ce cas, le procédé suivant l'invention fournit, outre le sel marin et ses constituants, de l'électricité ou de l'hydrogène, ou les deux, et de l'eau douce. En outre, le sel marin peut être transformé, par oxydation par des procédés connus, en chlorate de sodium, $NaClO_3$, entrant entre autres dans la fabrication des allumettes et utilisable comme carburant, par exemple en pyrotechnie. L'un des procédés connus d'oxydation du sel marin consiste en une électrolyse en milieu neutre fournissant $NaClO_3$ et de l'hydrogène selon la réaction : $NaCl + 3\ H_2O \longrightarrow NaClO_3 + 3\ H_2$

(voir Techniques de l'Ingénieur, PARIS, France ; tome Génie Chimique J6020-961 de 11-1965). L'électricité nécessaire peut être fournie par le présent procédé.

La substance aqueuse de départ peut aussi être constituée par des boues de stations d'épuration d'eau, auquel cas le sous-produit est un résidu sec, qui a été stérilisé compte tenu des conditions de température et de pression lors de l'ébullition, et qui est utilisable, par exemple, comme engrais sec, non polluant. Comme dans le cas précédent, on obtient simultanément de l'électricité, et/ou de l'hydrogène, et de l'eau douce. Une forme supplémentaire d'énergie peut être obtenue ; en effet, les boues d'épuration séchées et stérilisées par le procédé peuvent être comprimées en briquettes combustibles, comme on fait avec un poussier, l'énergie des compresseurs pouvant éventuellement être fournie par le système lui-même.

Ainsi, l'un des buts de l'invention est une utilisation rentable de l'énergie solaire ou d'une autre source d'énergie onéreuse, compte tenu d'une triple récupération (sources d'énergie, eau douce, sous-produits utiles).

Toute autre substance aqueuse, abandonnant par évaporation un résidu de valeur, peut être utilisée comme matière première dans le présent procédé.

C'est ainsi que l'on peut employer, comme substance aqueuse de départ, non seulement l'eau de mer, mais encore une solution de sel gemme, dans les régions où il existe des gisements de ce sel, dont on est souvent amené à rejeter les excédents, en polluant ainsi les cours d'eau. Les solutions de sel gemme fourniront, dans l'application du présent procédé, du chlorate de sodium et de l'hydrogène, de la même façon que l'eau de mer.

Il est à noter que le chlorate de sodium peut être transformé, de façon connue, en chlorate de potassium, par double décomposition au moyen du chlorure de potassium, suivant la réaction :

$$NaClO_3 + KCl \longrightarrow KClO_3 + NaCl.$$

On obtient un précipité de chlorate de potassium, qui a les mêmes usages que le chlorate de sodium et qui a aussi des

applications en pharmacie. Un procédé de préparation du chlorate de potassium est décrit dans l'ouvrage "Techniques de l'Ingénieur", PARIS, France, tome Génie Chimique, page J 6020-961 de la mise à jour 11-1965.

Le chlorate, qu'il s'agisse du chlorate de sodium ou du chlorate de potassium, est utilisable comme carburant de la façon suivante : il est partiellement, mais suffisamment soluble dans l'alcool éthylique pour constituer un équivalent de l'essence pour les moteurs à explosion, et il est soluble dans les huiles minérales en permettant, sous cette forme, de faire tourner les moteurs Diesel ; en outre, il est directement utilisable sous forme solide pour la propulsion des fusées et il peut, sous cette forme, être mélangé à tout autre produit combustible solide ou être mis en suspension dans tout produit combustible liquide.

On peut aussi employer, comme substance aqueuse de départ, des boues de stations d'épuration d'eau, ou les eaux à épurer elles-mêmes, que l'on sale par addition d'eau de mer ou de sel gemme. Dans ce cas, l'électrolyse du résidu de l'évaporation, consistant en une saumure chargée de boues et amenée à une concentration en sel convenable pour l'électrolyse, fournit un mélange de boues et de chlorate de sodium, qui, après dessiccation, constitue un meilleur combustible que les boues séchées seules.

Ce combustible, comme toutes les sources d'énergie fournies par le procédé, peut être employé dans le procédé lui-même. Il peut aussi être mélangé avec des ordures ménagères, pour faciliter l'incinération de celles-ci, ou même permettre l'utilisation de ces dernières comme combustible pour la mise en oeuvre du procédé.

L'évaporation de la substance aqueuse de départ dans une enceinte étanche peut être effectuée par charges, avec évacuation et stockage du résidu, qui, lorsque la substance traitée est une eau salée, pourra servir à alimenter un électrolyseur. Dans ce cas, le résidu est, de préférence, non pas un solide salé dont il faudrait redissoudre le constituant sel, mais une saumure concentrée ayant une teneur en chlorure de sodium

convenant pour l'électrolyse. Toutefois, l'électrolyseur peut aussi être ladite enceinte étanche elle-même, au sommet de laquelle sont placées les électrodes. On laisse alors le sel s'accumuler au fond de l'enceinte au cours de l'évaporation de la substance aqueuse introduite en continu et on procède à l'électrolyse, après avoir laissé refroidir l'enceinte et l'avoir remplie totalement d'eau, afin d'éviter le mélange détonant air-hydrogène, lorsque la quantité de sel, déposée dans l'enceinte et que l'on redissout dans un volume de liquide remplissant totalement celle-ci, correspond à la concentration en chlorure de sodium souhaitable pour l'électrolyse (environ 200 g/l).

Pour le procédé d'électrolyse, on se reportera également à l'ouvrage de Faith, Keyse et Clark "Industrial Chemicals", 2ème Edition, Wiley Editeur, NEW YORK (1957), pages 665-670, chapitre intitulé "Chlorate de sodium obtenu par électrolyse".

Les récipients employés pour la mise en oeuvre du procédé doivent bien entendu résister à la corrosion, être par exemple en fer galvanisé ou en acier inoxydable ou au titane, et ils doivent résister aux hautes pressions,la réalisation de tels récipients étant connue en soi.

Lorsque le chlorate de potassium est employé comme carburant dans les moteurs, compte tenu de l'effet corrosif du chlore, il convient d'employer, pour les pièces du moteur en contact avec le carburant, des matériaux résistant à la corrosion ; on peut avoir recours à un métal doublé de polytétrafluoréthylène, matière plastique vendue sous la marque "Téflon", pour les pièces où la température des gaz est inférieure à 180°C, comme par exemple le tuyau d'échappement.

Un intérêt supplémentaire du présent procédé est que la vapeur d'eau recueillie peut encore, avant d'être condensée, pour servir d'eau douce, être utilisée pour chauffer à des fins industrielles ou domestiques, ce qui représente une récupération complémentaire d'énergie.

La vapeur d'eau recueillie à la sortie de la turbine ou du récipient de réduction en hydrogène étant encore sous haute pression, de l'ordre de 200 à 250 bars, les tuyauteries recevant

cette vapeur doivent également présenter une résistance mécanique adéquate. La résistance nécessaire sera d'ailleurs dégressive, la pression de la vapeur diminuant par perte de charge, au fur et à mesure que la vapeur progresse dans la canalisation, et cette pression permettant de conduire la vapeur à de longues distances,avant qu'elle ne se condense.

L'enceinte étanche, dans laquelle on enferme la substance aqueuse, est avantageusement un récipient clos métallique, bon conducteur de la chaleur. Si l'on emploie l'énergie solaire, il est préférablement noir, dans le cas où l'on veut chauffer uniquement par "effet de serre" ; c'est le procédé le plus simple. Toutefois, tous les systèmes optiques solaires connus, du plus simple au plus compliqué, sont utilisables pour concentrer les rayons solaires sur le récipient. On peut faire appel à des héliostats ou, de façon plus pratique et moins coûteuse, à des loupes, d'une puissance comprise de préférence entre 12 et 24 dioptries. On peut employer un ensemble de loupes disposées en coupole et couronne au-dessus du récipient. Celui-ci doit être étanche et c'est son couvercle qui est chauffé. L'utilisation des loupes comme couvercle du récipient n'est pas convenable, car la buée, qui s'y dépose alors, annihile leur effet.

Le récipient, qui est en un métal inoxydable comme sus-indiqué, comporte, bien entendu, une entrée d'alimentation en substance aqueuse, une sortie pour la vapeur produite et une sortie d'évacuation du résidu. L'entrée d'alimentation est pourvue d'une vanne ou d'un robinet de réglage du débit et la sortie pour la vapeur est équipée d'un manomètre et d'une soupape de sécurité s'ouvrant à la pression de vapeur désirée, qui est fonction du type de turbine que la vapeur d'eau est destinée à actionner pour la production d'électricité ; c'est,généralement, la tension de vapeur d'eau à 800°C environ. Si la vapeur est envoyée parallèlement dans une enceinte de réduction catalytique en hydrogène par le fer, la même température d'environ 800°C est nécessaire dans cette enceinte et est ainsi immédiatement obtenue.

La pompe employée pour alimenter en substance aqueuse le récipient, de même que celle employée pour refouler l'eau

douce produite dans les canalisations d'utilisation, peut être une pompe solaire, par exemple celle commercialisée par les Etablissements Defontaine, Nantes, France. L'emploi d'une pompe solaire est plus rationnel, lorsque le récipient est chauffé lui-même par l'énergie solaire, l'alimentation en eau devant correspondre à la production de vapeur, elle-même fonction de l'ensoleillement. En outre, cela évite de consommer une autre forme d'énergie, le but étant de produire de l'énergie. On peut aussi utiliser une partie de l'énergie produite par le procédé, pour alimenter les pompes, cette énergie pouvant avoir, comme on l'a indiqué ci-dessus, diverses formes (électricité, hydrogène, chlorate de sodium). La turbine est d'un type connu en soi, aménagé pour permettre la récupération de la vapeur d'eau à sa sortie.

Cette vapeur est soit condensée en eau douce, soit envoyée dans l'enceinte de réduction, qui est un autre récipient métallique bon conducteur de la chaleur et étanche contenant du fer chauffé à au moins 800°C, par l'énergie solaire, ou toute autre forme d'énergie. On récupère, par réduction sur le fer, environ 8 % de l'hydrogène combiné que contient la vapeur d'eau. L'eau non dissociée sortant de ce second récipient est condensée en eau douce.

Compte tenu des sources d'énergie que le procédé fournit, il est bien entendu possible de continuer à chauffer la substance aqueuse, par exemple quand l'énergie solaire fait défaut (pendant la nuit) ou est insuffisante (suivant les conditions atmosphériques et les saisons), ou pour économiser toute autre source d'énergie à laquelle on a recours, en utilisant lesdites sources d'énergie fournies (électricité et hydrogène, quand la substance aqueuse traitée est l'eau de mer ou une solution de sel gemme; électricité, hydrogène et briquettes combustibles de boues séchées, quand la substance aqueuse traitée est les boues de stations d'épuration d'eau).

On a vu ci-dessus les utilisations possibles de l'eau douce récupérée. Notamment dans les régions où il y a du soleil, qu'il convient d'utiliser comme source d'énergie, mais où l'eau manque, l'eau récupérée peut être mise en bouteilles comme eau

potable, être stockée dans des réservoirs en vue d'usages domestiques et d'épandages sur des sols arides. Si la vapeur d'eau récupérée est encore sous pression, cela facilite son acheminement par canalisations souterraines jusqu'à des réservoirs éloignés. Pour ce qui concerne l'aspect économique du procédé, il y a une étroite correspondance entre les investissements en matériel et le rendement du procédé. C'est ainsi que si l'on se borne, et cela selon l'ensoleillement, à extraire du sel de l'eau de mer, ou à stériliser des boues d'épuration d'eau, tout en produisant de l'électricité et en recueillant de l'eau douce, il suffit de faire appel à l'effet de serre, ou préférablement à cet effet amélioré par un système de loupes, qui est peu coûteux. Si l'on désire de surcroît produire de l'hydrogène, lorsque l'ensoleillement est suffisant pour permettre cette production, il faut faire appel à des systèmes optiques plus coûteux, compte tenu de la température élevée à atteindre dans le récipient de réduction. L'amortissement du matériel s'en trouve accrû, mais la rentabilité du procédé est également augmentée.

EXEMPLE

On utilise, comme substance de départ, une eau de mer contenant 20 à 30 g/l de chlorure de sodium et, comme source initiale d'énergie, du charbon.

On chauffe l'eau de mer dans un récipient clos de façon étanche, résistant à la corrosion et à la pression et chauffé par le dessous. Ce récipient présente, à sa partie supérieure, un orifice sur lequel est branchée une canalisation d'introduction de l'eau de mer d'alimentation et un orifice sur lequel est branchée une canalisation d'évacuation de la vapeur produite; la première canalisation est pourvue d'une vanne ou d'un robinet et la seconde canalisation est pourvue d'un manomètre et est fermée par un clapet, qui ne s'ouvre que sous l'effet d'une pression correspondant à la tension de vapeur d'eau à 800°C. A la base du récipient, est branchée une canalisation munie d'une vanne ou d'un robinet pour l'évacuation de la saumure concentrée résiduelle.

On opère par charges et on arrête l'évaporation et soutire

la saumure résiduelle, lorsque celle-ci présente une concentration en chlorure de sodium d'environ 200 g/l, qui est celle habituellement utilisée pour l'électrolyse fournissant du chlorate de sodium et de l'hydrogène. On rassemble et stocke les saumures résiduelles concentrées, qui serviront à alimenter un électrolyseur, que l'on fait fonctionner à environ 70°C pour la production, de façon connue en soi, du chlorate de sodium et de l'hydrogène. A la sortie de l'électrolyseur, la solution titre environ 500 g/l de chlorate de sodium et 100 g/l de chlorure de sodium ; elle est envoyée dans des réservoirs que l'on refroidit par saumure vers -10°C ; le chlorate de sodium précipite ; la suspension du précipité est soutirée en discontinu des réservoirs de refroidissement, le chlorate de sodium est alors séparé, lavé et séché et la solution résiduelle, titrant 300 g/l de chlorate de sodium et 100 g/l de chlorure de sodium est recyclée dans l'électrolyseur, après avoir été enrichie en chlorure de sodium au moyen de la saumure résiduelle concentrée résultant de l'évaporation de l'eau de mer.

En variante, le récipient d'évaporation peut aussi servir lui-même, périodiquement, d'électrolyseur, auquel cas il est muni à son sommet d'une sortie supplémentaire avec canalisation pour l'évacuation de l'hydrogène, la sortie inférieure étant alors utilisée pour l'évacuation de la solution de chlorate de sodium. Les deux électrodes sont placées au sommet du récipient. On procède à l'évaporation, en alimentant en continu le récipient avec de l'eau de mer, jusqu'à ce que le dépôt de chlorure de sodium au fond du récipient soit suffisant pour que la dissolution de ce sel dans un volume d'eau emplissant complètement le récipient fournisse une saumure à environ 200 g/l de chlorure de sodium. On procède à l'électrolyse après refroidissement du récipient à la température requise de 70°C environ.

La vapeur d'eau évacuée à 800°C au cours de la phase d'évaporation est envoyée, en parallèle, dans une turbine de turbo-alternateur et dans un récipient de réduction, clos de façon étanche et résistant à la corrosion et à la pression. Ce récipient renferme du fer, qui est oxydé en hydroxyde ferrique, tandis qu'une partie de la vapeur d'eau est réduite en hydrogène,

qui s'échappe avec la vapeur d'eau non réduite par un orifice prévu au sommet du récipient de réduction et sur lequel est branchée une canalisation de récupération du gaz et de la vapeur d'eau, cette dernière étant séparée et recueillie par condensation.

A la sortie de la turbine, la vapeur d'eau est à une pression comprise entre 200 et 250 bars. On peut immédiatement la refroidir pour la condenser en eau douce, ou bien on utilise sa pression pour l'envoyer se condenser dans des réservoirs situés à grande distance, et l'on récupère de préférence ses calories pour un chauffage industriel ou domestique, au cours de son refroidissement.

Ces opérations fournissent donc, comme sources d'énergie, de l'électricité à la sortie du turbo-alternateur, du chlorate de sodium et de l'hydrogène résultant de l'électrolyse, et de l'hydrogène résultant de la réduction de la vapeur d'eau.

Quant aux sous-produits, ce sont l'oxyde ferrique provenant de la réduction de la vapeur d'eau et utilisable comme oligo-élément en agriculture, le sel marin et les éléments chimiques qu'il contient, si l'on recueille une partie du sel sans l'électrolyser, et l'eau douce provenant de la condensation de la vapeur d'eau.

On comprend que, dans ce cas, la source d'énergie initiale pour la mise en oeuvre du procédé puisse être un charbon situé à une profondeur telle que son exploitation a été abandonnée, mais peut être reprise et devient rentable dans le cas particulier considéré.

Bien entendu, toutes les sources d'énergie produites peuvent, après la mise en route du procédé, remplacer le charbon, pour chauffer le récipient d'évaporation et le récipient de réduction ; ces énergies sont également utilisables pour actionner la pompe alimentant le récipient d'évaporation, celle refoulant dans les canalisations d'utilisation l'eau douce produite et toutes les autres pompes et en général tous les moteurs dont l'emploi peut s'avérer nécessaire dans le procédé.

DIX PAGES.-

P/P GRENET Edouard Paul

L'un des Mandataires,

# REVENDICATIONS

1.- Procédé d'obtention simultanée et rentable de sources d'énergie, d'eau douce et d'au moins un sous-produit, à partir de substances aqueuses et d'une source d'énergie telle que l'énergie solaire, suivant lequel on porte à ébullition la substance aqueuse enfermée dans une enceinte étanche, l'enceinte étant pourvue de moyens d'alimentation en substance aqueuse et de moyens de récupération de la vapeur d'eau et du résidu de l'évaporation, on envoie la vapeur d'eau produite, sous pression, dans une turbine de turbo-alternateur pour la production d'électricité, on condense en eau douce la vapeur d'eau sortant de la turbine, pour l'utiliser comme eau potable, eau à usages domestiques, ou eau d'arrosage ou d'irrigation, et on récupère comme sous-produit le résidu de l'évaporation de la substance aqueuse, caractérisé en ce que l'on envoie en outre la vapeur d'eau, soit directement, soit à sa sortie de la turbine, sur du fer chauffé à environ 800°C, pour la réduire partiellement en hydrogène que l'on recueille, et on condense en eau douce la vapeur d'eau, qui n'a pas été réduite après passage sur le fer, pour l'utiliser aux fins susindiquées, et en ce que l'on emploie comme source d'énergie initiale pour chauffer la substance aqueuse de départ et la vapeur d'eau à réduire, outre l'énergie solaire, toute autre source connue d'énergie, même non rentable.

2.- Procédé suivant la revendication 1, caractérisé en ce que ladite source d'énergie non rentable est du charbon extrait à de grandes profondeurs et qui est rentabilisé par les sources d'énergie et les sous-produits résultant de ce procédé.

3.- Procédé suivant la revendication 1 ou 2, dans lequel la substance aqueuse de départ est l'eau de mer et le sous-produit est le sel marin, caractérisé en ce que ledit sel marin est transformé en un autre sous-produit, le chlorate de sodium, $NaClO_3$, par oxydation du sel marin, le chlorate de sodium étant utilisable comme carburant.

4.- Procédé suivant la revendication 3, caractérisé en ce que ladite oxydation est produite par une électrolyse en milieu neutre, connue en soi, du sel marin, l'électricité nécessaire étant fournie par le procédé, cette électrolyse fournissant simultanément de l'hydrogène.

5.- Procédé suivant la revendication 1 ou 2, caractérisé en ce que la substance aqueuse de départ est les boues de stations d'épuration d'eau et le sous-produit est un engrais constitué par les boues séchées et stérilisées.

6.- Procédé suivant la revendication 5, caractérisé en ce que lesdites boues séchées et stérilisées sont transformées par compression en un autre sous-produit, à savoir des briquettes combustibles.

7.- Procédé suivant la revendication 6, caractérisé en ce que les compresseurs sont actionnés avec une partie de l'énergie produite par le procédé, sous l'une quelconque de ses diverses formes.

8.- Procédé suivant la revendication 1 ou 2, caractérisé en ce que la substance aqueuse de départ est une solution de sel gemme et en ce que le sous-produit est du chlorure de sodium transformable, comme le sel marin, en chlorate de sodium et hydrogène.

9.- Procédé suivant la revendication 1 ou 2, caractérisé en ce que la substance aqueuse de départ est constituée par des boues de stations d'épuration d'eau ou par les eaux à épurer elles-mêmes, auxquelles on ajoute du sel sous forme d'eau de mer ou de sel gemme.

10.- Procédé suivant la revendication 9, caractérisé en ce que l'on obtient comme sous-produit, par électrolyse du résidu de l'évaporation consistant en une saumure chargée de boues et amenée à une concentration en sel convenable pour l'électrolyse, un mélange de boues et de chlorate de sodium, qui, après dessiccation, constitue un combustible meilleur que les boues séchées seules.

11.- Procédé suivant la revendication 10, caractérisé en ce que l'on mélange ledit combustible formé de boues séchées et de chlorate de sodium avec des ordures ménagères, en vue de faciliter l'incinération de celles-ci ou de permettre l'utilisation de ces dernières comme combustible pour la mise en oeuvre du procédé.

12.- Procédé suivant l'une quelconque des revendications 1 à 4 et 8, dans lequel la substance aqueuse de départ est l'eau de mer ou une solution de sel gemme, qui fournit, à titre de sous-produits, du chlorate de sodium et de l'hydrogène, par électrolyse du résidu de l'évaporation, qui est une solution concentrée de chlorure de sodium, caractérisé en ce que l'on transforme le chlorate de sodium en chlorate de potassium par double décomposition au moyen de chlorure de potassium, ledit chlorate de potassium étant utilisable à titre de carburant et en pharmacie et constituant un sous-produit supplémentaire.

13.- Procédé suivant la revendication 12, caractérisé en ce que le chlorate de sodium ou de potassium est utilisable comme carburant, en solution dans l'alcool éthylique pour les moteurs à explosion, en solution dans les huiles minérales pour les moteurs Diesel, sous forme solide pour la propulsion des fusées, et sous forme solide en mélange avec un autre produit combustible solide ou en suspension dans un autre produit combustible liquide.

14.- Procédé suivant l'une quelconque des revendications 1 à 4 et 8 à 10, la substance aqueuse de départ étant salée, caractérisé en ce que l'on effectue l'électrolyse du résidu de l'évaporation sous forme d'une saumure concentrée ayant une teneur en chlorure de sodium convenant pour l'électrolyse, qui fournit du chlorate de sodium et de l'hydrogène.

15.- Procédé suivant la revendication 14, caractérisé en ce que l'on procède à l'électrolyse dans un électrolyseur distinct de l'enceinte d'évaporation.

16.- Procédé suivant la revendication 14, caractérisé en ce que l'on effectue l'électrolyse dans l'enceinte d'évaporation, après l'avoir laissée refroidir et l'avoir remplie totalement d'eau.

17.- Procédé suivant l'une quelconque des revendications 1 à 16, caractérisé en ce que la vapeur d'eau recueillie et destinée à être condensée en eau douce est utilisée pour chauffer à des fins industrielles ou domestiques, avant d'être condensée.

18.- Procédé suivant l'une quelconque des revendications 1 à 17, caractérisé en ce que l'on emploie des pompes solaires pour alimenter en substance aqueuse ladite enceinte et pour refouler, dans les canalisations d'utilisation, l'eau douce produite.

19.- Procédé suivant l'une quelconque des revendications 1 à 17, caractérisé en ce que l'on actionne, avec une partie de l'énergie produite par le procédé, sous l'une quelconque de ses diverses formes, la pompe alimentant en substance aqueuse ladite enceinte et celle refoulant dans les canalisations d'utilisation l'eau douce produite.

20.- Procédé suivant la revendication 1, caractérisé en ce que ledit fer, qui est oxydé en oxyde de fer, $Fe_3O_4$, est utilisable comme oligo-élément pour l'agriculture.

21.- Procédé suivant l'une quelconque des revendications 1 à 20, caractérisé en ce que, après sa mise en route, on utilise les diverses sources d'énergie, qui sont produites par le procédé, pour chauffer la substance aqueuse de départ et la vapeur d'eau à réduire, en remplacement partiel des autres sources d'énergie.

22.- Procédé suivant la revendication 1, caractérisé en ce que la vapeur d'eau destinée à être condensée en eau douce est envoyée encore sous pression dans les canalisations, ce qui assure son transport jusqu'à des réservoirs éloignés, où elle se condense.

QUATRE PAGES.- P/P de GRENET Edouard Paul

L'un des Mandataires,

0014648

Office européen des brevets

# RAPPORT DE RECHERCHE EUROPEENNE

Numéro de la demande

EP 80 40 0162

## DOCUMENTS CONSIDERES COMME PERTINENTS

| Catégorie | Citation du document avec indication, en cas de besoin, des parties pertinentes | Revendication concernée |
|---|---|---|
| A | FR - A - 1 379 653 (S.E.T.I.R.) | |
| A | FR - A - 2 269 039 (J.C.A. CHEVALLEY) | |
| A | US - A - 2 579 932 (S.T. KOBERNICK) | |
| A | DE - A - 2 545 862 (IMP et al.) | |
| A | DE - A - 2 753 537 (SAARBERG-FERNWARME) | |
| A | DE - A - 1 642 467 (H. HOHMANN) | |
| A | DE - C - 43 989 (J.BELOU) | |
| | ---- | |

**CLASSEMENT DE LA DEMANDE (Int. Cl. 3)**

C 02 F 1/14
1/16
F 24 J 3/02

**DOMAINES TECHNIQUES RECHERCHES (Int. Cl. 3)**

C 02 F 1/04
1/02
1/14
1/16
F 24 J 3/02

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d autres raisons

&: membre de la même famille, document correspondant

X Le présent rapport de recherche a été établi pour toutes les revendications

| Lieu de la recherche | Date d'achevement de la recherche | Examinateur |
|---|---|---|
| La Haye | 18-04-1980 | V. AKOLEYEN |